# EUROPEAN PATENT APPLICATION

(11) **EP 4 412 385 A1**
(43) Date of publication of application: **07.08.2024**
(21) Application number: 22876116.9
(22) Date of filing: 26.09.2022
(51) Int. Cl.: H04W 76/15, H04W 16/28, H04W 84/12

(54) **COMMUNICATION DEVICE, METHOD FOR CONTROLLING COMMUNICATION DEVICE, AND PROGRAM FOR SAME**

(30) Priority: 30.09.2021 JP 2021162359
(71) Applicant: CANON KABUSHIKI KAISHA, Tokyo 146-8501 (JP)
(72) Inventor: TAKADA, Tomoyuki, Tokyo 146-8501 (JP)
(74) Representative: Canon Europe Limited
(86) International application number: PCT/JP2022/035673
(87) International publication number: WO 2023/054249

(57) **Abstract**

Selecting at least one EMLMR link is performed from among a plurality of EMLMR links, based on information about a multi-link communication.

## Description

### Technical Field

The present invention relates to a communication apparatus that performs wireless communication, a control method of the communication apparatus, and a program thereof.

### Background Art

With increase in communication data amount in recent years, the development of communication techniques, such as a wireless local area network (LAN), have been worked. The Institute of Electrical and Electronics Engineers (IEEE) 802.11 standard series has been known as major wireless LAN communication standards. The IEEE 802.11 standard series includes standards such as IEEE 802.11a/b/g/n/ac/ax. For example, the latest standard IEEE 802.11ax standardizes a technique for improving communication speed under congested conditions, in addition to a high throughput of up to 9.6 Gbit/sec (Gbps), using orthogonal frequency-division multiple access (OFDMA) (see Patent Literature [PTL] 1). OFDMA is an abbreviation for orthogonal frequency-division multiple access.

A task group called IEEE 802.11be has been launched as a successor standard aiming to improve throughput, frequency use efficiency, and communication latency.

As for IEEE 802.11be, multi-link communication has been studied, which allows simultaneous communication on a plurality of links constructed by an access point (AP) with a station (STA) in frequency bands, such as 2.4-, 5-, and 6-GHz bands. The AP in multi-link communication is referred to as an AP multi-link device (AP MLD), and the STA is referred to as a non-AP MLD.

As for IEEE 802.11be, an enhanced multi-link multi-radio (EMLMR) operation in multi-link communication has also been studied. A non-AP MLD operating in an EMLMR mode performs initial frame exchange with the number of spatial streams based on the per-link spatial stream capability of each EMLMR link, and then performs the following operation on the link where the initial frame exchange has been performed, until the end of a frame exchange sequence. The operation includes receiving physical layer convergence protocol data units (PPDUs) with the number of spatial streams up to a value presented by an EMLMR SUPPORTED Modulation and Coding Scheme (MCS) AND Number of Spatial Streams (NSS) SET subfield in a Common Info field of a Basic variant Multi-Link element, and transmitting PPDUs with the number of spatial streams presented by the EMLMR Supported MCS and NSS SET subfield.

### Citation List

### Patent Literature

PTL 1: Japanese Patent Laid-Open No. 2018-50133

### Summary of Invention

### Technical Problem

No consideration is given to the operation in the case where another start frame is received on another EMLMR link after the start of initial frame exchange on a specific EMLMR link, i.e., between the reception of an initial frame to start the frame exchange sequence and the transmission of a response frame thereto. The operation in the EMLMR mode therefore needs to be appropriately controlled in a case where a plurality of EMI,MR links has been established.

The present invention is directed to appropriately controlling operation in the EMLMR mode in a case where a plurality of EMLMR links has been established. Solution to Problem

According to an aspect of the present invention, a communication apparatus that operates as a multi-link device complaint with an Institute of Electrical and Electronics Engineers (IEEE) 802.11 series standard, the communication apparatus includes a selection unit configured to select at least one enhanced multi-link multi-radio (EMLMR) link from among a plurality of EMLMR links, based on information about a link of multi-link communication; and a control unit configured to control start of a frame exchange sequence on the selected at least one EMLMR link.

### Advantageous Effects of Invention

According to the present invention, the operation in the EMLMR mode is able to be appropriately controlled in a case where a plurality of EMLMR links has been established.

### Brief Description of Drawings

[Fig. 1] Fig. 1 is a diagram illustrating a configuration of a network according to the present invention.
[Fig. 2] Fig. 2 is a diagram illustrating a hardware configuration of a communication apparatus according to the present invention.
[Fig. 3] Fig. 3 is a diagram illustrating a functional configuration of the communication apparatus according to the present invention.
[Fig. 4] Fig. 4 is a diagram illustrating an outline of multi-link communication.
[Fig. 5A] Fig. 5A is a diagram illustrating a Basic variant Multi-Link element included in an Association Request frame.
[Fig. 5B] Fig. 5B is a diagram illustrating EMLMR Capabilities subfields included in a Common Info field of the Basic variant Multi-Link element.
[Fig. 6A] Fig. 6A is a flowchart of processing that is performed to start a frame exchange sequence on an EMLMR link according to the present invention.
[Fig. 6B] Fig. 6B is a flowchart of the processing that is performed to start a frame exchange sequence on an EMLMR link according to the present invention.

### Description of Embodiments

Hereinafter, exemplary embodiments of the present invention will be described in detail with reference to the accompanying drawings. The configurations described in the following exemplary embodiments are merely examples, and the present invention is not limited to the illustrated configurations.

### (Configuration of Wireless Communication System)

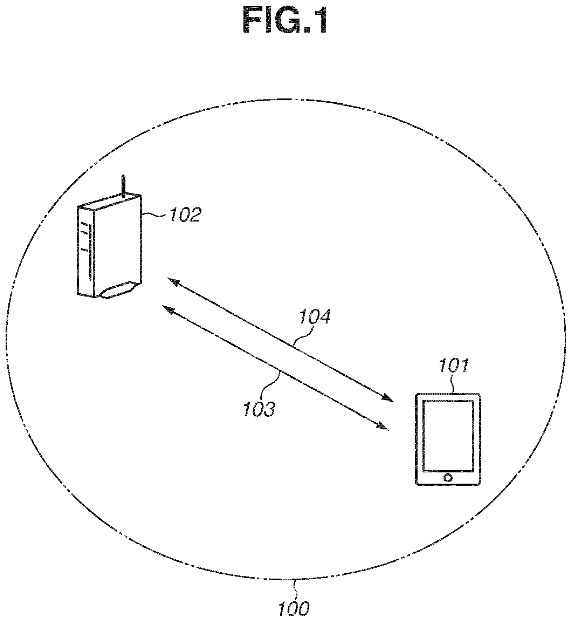

Fig. 1 illustrates a configuration of a network where a communication apparatus 101 (hereinafter, a Non-access point [Non-AP] multi-link device [MLD] 101) according to the present invention searches. A communication apparatus 102 (hereinafter, an access point [AP] MLD 102) is an AP having the role of constructing a wireless network 100. The AP MLD 102 can communicate with the Non-AP MLD 101. The present exemplary embodiment applies to the Non-AP MLD 101 and the AP MLD 102.

The Non-AP MLD 101 and the AP MLD 102 can each perform wireless communication compliant with the Institute of Electrical and Electronics Engineers (IEEE) 802.11be (Extremely High Throughput [EHT]). IEEE is an abbreviation for the Institute of Electrical and Electronics Engineers. The Non-AP MLD 101 and the AP MLD 102 can communicate at frequencies in 2.4-, 5-, and 6-GHz bands. The frequency bands for the communication apparatuses to use are not limited thereto. For example, other frequency bands, such as a 60-GHz band, may be used. The Non-AP MLD 101 and the AP MLD 102 can communicate using bandwidths of 20 MHz, 40 MHz, 80 MHz, 160 MHz, and 320 MHz. The bandwidths for the communication apparatus to use are not limited thereto. For example, other bandwidths, such as 240 MHz and 4 MHz, may be used.

The Non-AP MLD 101 and the AP MLD 102 can implement multi user (MU) communication where the signals of a plurality of users are multiplexed by performing orthogonal frequency division multiple access (OFDMA) communication compliant with the IEEE 802.11be standard. OFDMA is an abbreviation for orthogonal frequency division multiple access. In OFDMA communication, some of divided frequency bands (resource units [RUs]) are assigned to STAs in a Non-overlapping manner so that the carriers of the respective STAs are orthogonal to each other. An AP can thus communicate with a plurality of STAs in parallel within a defined bandwidth.

In general, coverage of radio waves varies with frequencies. It is known that the lower the frequency, the more strongly the radio waves diffract, and the longer distance the radio waves cover. The higher the frequency, the more weakly the radio waves diffract, and the shorter distance the radio waves cover. Low-frequency radio waves diffract around obstacles on the way and reach, while high-frequency radio waves have high directivity and can fail to diffract around and reach. On the other hand, the 2.4-GHz frequencies are often used by other devices, and microwave ovens are kwon to radiate radio waves of the same frequency band. Radio waves emitted from the same device can thus reach with different strengths or signal/noise (SN) ratios depending on the placed location and environment and the frequency band.

While the Non-AP MLD 101 and the AP MLD 102 are described to support the IEEE 802.11be standard, legacy standards prior to the IEEE 802.11be standard may be supported as well. Specifically, the Non-AP MLD 101 and the AP MLD 102 may support at least one of the IEEE 802.11a/b/g/n/ac/ax standards. Other communication standards such as Bluetooth^{®}, near field communication (NFC), Ultra Wide Band (UWB), ZigBee, and Multi Band orthogonal frequency division multiplexing (OFDM) Alliance (MBOA) may also be supported in addition to the IEEE 802.11 series standards. UWB is an abbreviation for Ultra Wide Band. MBOA is an abbreviation for Multi Band OFDM Alliance. NFC is an abbreviation for near field communication. UWB includes Wireless Universal Serial Bus (USB), Wireless 1394, and WiNET. A communication standard for wired communication, such as a wired local area network (LAN), may be supported. Specific examples of the AP MLD 102 include, but not limited to, a wireless LAN router and a personal computer (PC). The AP MLD 102 may be an information processing device, such as a wireless chip, that can perform wireless communication compliant with the IEEE 802.11be standard.

Specific examples of the Non-AP MLD 101 include, but not limited to, a camera, a tablet, a smartphone, a PC, a mobile phone, a video camera, and a headset. The Non-AP MLD 101 may be an information processing device, such as a wireless chip, that can perform wireless communication compliant with the IEEE 802.11be standard.

Each communication apparatus can communicate using the bandwidths of 20 MHz, 40 MHz, 80 MHz, 160 MHz, and 320 MHz.

The Non-AP MLD 101 and the AP MLD 102 perform multi-link communication where communication is performed by establishing links via a plurality of frequency channels. The IEEE 802.11 series standards define frequency channels to have a bandwidth of 20 MHz except for the 60-GHz band. In the 60-GHz band, frequency channels are defined to have a bandwidth of 2.16 GHz. As employed herein, frequency channels refer to ones defined by the IEEE 802.11 series standards. The IEEE 802.11 series standards define a plurality of frequency channels in each of the 2.4-, 5-, 6-, and 60-GHz frequency bands. Adjoining frequency channels can be bonded to use a bandwidth of 40 MHz or more on a frequency channel. For example, the AP MLD 102 has the capability of establishing a link via a first frequency channel in the 2.4-GHz band and communicating with the Non-AP MLD 101. The Non-AP MLD 101 has the capability of establishing a link via a second frequency channel in the 5-GHz band and communicating with the AP MLD 102 in parallel. In such a case, the Non-AP MLD 101 performs multi-link communication where the second link via the second frequency channel is maintained in parallel with the link via the first frequency channel.

The AP MLD 102 can thus improve throughput of communication with the Non-AP MLD 101 by establishing links via a plurality of frequency channels with the Non-AP MLD 101.

In multi-link communication, a plurality of links of different frequency bands may be established between the communication apparatuses. For example, the Non-AP MLD 101 can establish a link in each of the 2.4-, 5- and 6-GHz bands. Alternatively, links can be established via a plurality of different channels included in the same frequency band. For example, with a 6th-channel (6-ch) link in the 2.4-GHz band as a first link, a 1-ch link in the 2.4-GHz band can be additionally established as a second link. There may be links of the same frequency band and ones of different frequency bands. For example, the Non-AP MLD 101 can establish a 1-ch link in the 2.4-GHz band and a 149-ch link in the 5-GHz band in addition to a 6-ch first link in the 2.4-GHz band. Establishing a plurality of connections of different frequencies between the Non-AP MLD 101 and the AP enables, in a case of congestion in a certain band, the AP to establish connection with the Non-AP MLD 101 in a different band. This can prevent a drop in throughput of the communication with the Non-AP MLD 101 and a communication delay.

While the wireless network of Fig. 1 includes an AP MLD and a Non-AP MLD, the numbers of AP MLDs and Non-AP MLDs and the arrangement thereof are not limited thereto. For example, a Non-AP MLD may be added to the wireless network of Fig. 1. The frequency bands of the links to be established here, the number of links, and the frequency widths are not limited in particular.

In a start of multi-link communication, the AP MLD 102 and the Non-AP MLD 101 transmit and receive data to/from each other via a plurality of links. The AP MLD 102 and the Non-AP MLD 101 may transmit and receive data via one of the links constituting the multi-link.

The AP MLD 102 and the Non-AP MLD 101 may also be capable of multiple-input and multiple-output (MIMO) communication. In such a case, the AP MLD 102 and the Non-AP MLD 101 include a plurality of antennas, and either one transmits different signals from the respective antennas using the same frequency channel. The receiving device simultaneously receives all the signals arriving from the plurality of streams using the plurality of antennas, and separates and decodes the signals of the respective streams. By performing MIMO communication, the AP MLD 102 and the Non-AP MLD 101 can thus communicate more data at the same time than without MIMO communication. In a start of multi-link communication, the AP MLD 102 and the Non-AP MLD 101 may perform MIMO communication on some of the links.

### (Configuration of AP MLD and Non-AP MLD)

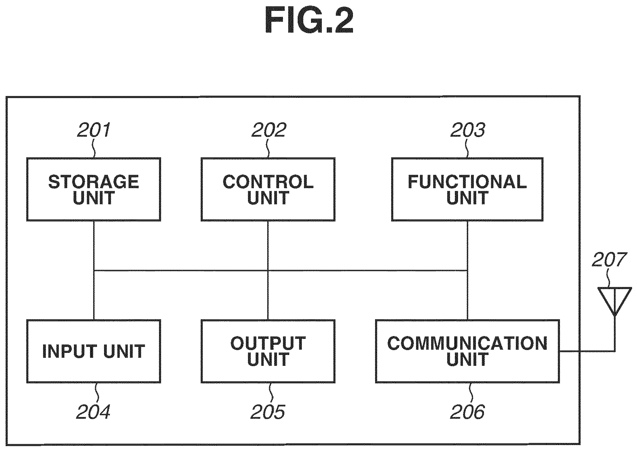

Fig. 2 illustrates a hardware configuration example of the Non-AP MLD 101 according to the present exemplary embodiment. The Non-AP MLD 101 includes a storage unit 201, a control unit 202, a functional unit 203, an input unit 204, an output unit 205, a communication unit 206, and an antenna 207. The antenna may be more than one.

The storage unit 201 includes one or more memories, such as a read-only memory (ROM) and a random access memory (RAM), and stores computer programs for various operations, being described below, and various types of information such as communication parameters for wireless communication. ROM is an abbreviation for read-only memory, and RAM for random access memory. Aside from memories, such as ROM and RAM, the storage unit 201 may use a storage medium, such as a flexible disk, a hard disk, an optical disc, a magnetooptical disc, a Compact Disc Read-Only Memory (CD-ROM), a Compact Disc Recordable (CD-R), a magnetic tape, a nonvolatile memory card, and a Digital Versatile Disc (DVD). The storage unit 201 may include a plurality of memories.

The control unit 202 includes one or more processors, such as a central processing unit (CPU) and a micro processing unit (MPU), for example, and controls entire operation of the Non-AP MLD 101 by executing the computer programs stored in the storage unit 201. The control unit 202 may control entire operation of the Non-AP MLD 101 through cooperation of the computer programs stored in the storage unit 201 and an operating system (OS). The control unit 202 generates data and signals (wireless frames) to be transmitted during communication with other communication apparatuses. CPU is an abbreviation for central processing unit, and MPU for micro processing unit. The control unit 202 may include a plurality of processors like a multicore processor, and the entire Non-AP MLD 101 may be controlled by the plurality of processors.

The control unit 202 controls the functional unit 203 to perform predetermined processing, such as wireless communication, imaging, printing, and projection. The functional unit 203 is hardware for the Non-AP MLD 101 to perform predetermined processing.

The input unit 204 accepts various operations from the user. The output unit 205 performs various types of output to the user via a monitor screen and a speaker. Examples of the output by the output unit 205 may include display on the monitor screen, an audio output from the speaker, and a vibration output. The input unit 204 and the output unit 205 may be both implemented by a single module like a touchscreen. The input unit 204 and the output unit 205 each may be either integrated with or separate from the Non-AP MLD 101.

The communication unit 206 controls wireless communication compliant with the IEEE 802.11be standard. In addition to the IEEE 802.11be standard, the communication unit 206 may control wireless communication compliant with other IEEE 802.11 series standards and/or wired communication, such as a wired LAN. The communication unit 206 controls the antenna 207 to transmit and receive signals for wireless communication generated by the control unit 202.

In a case where the Non-AP MLD 101 supports the NFC standard and/or the Bluetooth^{®} standard in addition to the IEEE 802.11be standard, the communication unit 206 may control wireless communication compliant with such communication standards. In a case where the Non-AP MLD 101 can perform wireless communication compliant with a plurality of communication standards, the Non-AP MLD 101 may separately include communication units and antennas corresponding to the respective communication standards. The Non-AP MLD 101 communicates data, such as image data, document data, and video data with the Non-AP MLD 101 via the communication unit 206. The antenna 207 may be configured as a member separate from the communication unit 206, or integrated into a single module with the communication unit 206.

The antenna 207 is an antenna capable of communication in the 2.4-, 5-, and 6-GHz bands. In the present exemplary embodiment, the Non-AP MLD 101 is described to include one antenna. However, the Non-AP MLD 101 may include three antennas. The Non-AP MLD 101 may include different antennas for respective frequency bands. If the Non-AP MLD 101 includes a plurality of antennas, communication units 206 corresponding to the respective antennas may be included.

The AP MLD 102 has a hardware configuration similar to that of the Non-AP MLD 101.

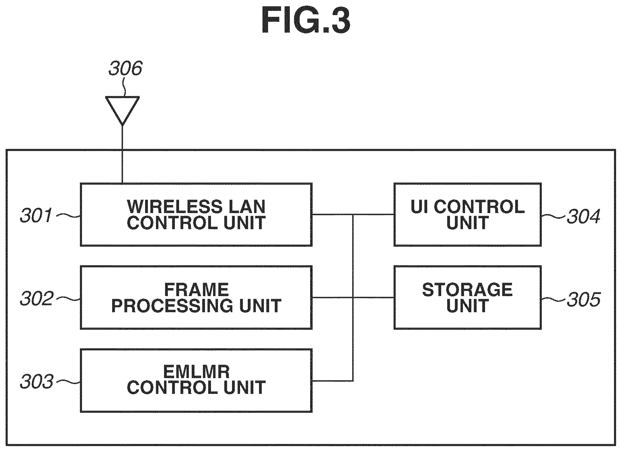

Fig. 3 illustrates a block diagram of a functional configuration of the Non-AP MLD 101 according to the present exemplary embodiment. The AP MLD 102 has a similar configuration. The Non-AP MLD 101 includes a wireless LAN control unit 301. The number of wireless LAN control units is not limited to one, and may be two, three, or more. The Non-AP MLD 101 further includes a frame processing unit 302, an enhanced multi-link multi-radio (EMLMR) management unit 303, a user interface (UI) control unit 304, a storage unit 305, and a wireless antenna 306.

The wireless LAN control unit 301 includes an antenna and circuit for transmitting and receiving wireless signals to/from other wireless LAN devices, and a program for controlling the antenna and circuit. The wireless LAN control unit 301 controls wireless LAN communication based on frames generated by the frame processing unit 302 in compliance with the IEEE 802.11 standard series.

The frame processing unit 302 processes wireless control frames that the wireless LAN control unit 301 transmits and receives. The content of wireless control that is generated and analyzed by the frame processing unit 302 may be limited by settings stored in the storage unit 305. The content may be modified by user settings from the UI control unit 304. Information about the generated frames is passed to the wireless LAN control unit 301 and transmitted to the communication partner. Information about frames received by the wireless LAN control unit 301 is passed to and analyzed by the frame processing unit 302.

The EMLMR management unit 303 performs management control to determine which link is to be used as an EMLMR link. The management control includes establishment of EMLMR links and deletion of EMLMR links.

The establishment of an EMLMR link refers to a state where the EMLMR link is identified during establishment of the multi-link or after the establishment of the multi-link. The deletion of an EMLMR link refers to a state where the state of the link identified as an EMLMR link is cancelled.

The UI control unit 304 includes UI-related hardware, such as a touchscreen or a button, for accepting an operation made on the Non-AP MLD 101 by a not-illustrated user of the Non-AP MLD 101, and a program for controlling such pieces of hardware. The UI control unit 304 also has a function of presenting information to the user, such as displaying an image and outputting sound.

The storage unit 305 is a storage device that can include a ROM and a RAM for storing programs and data for operation of the Non-AP MLD 101.

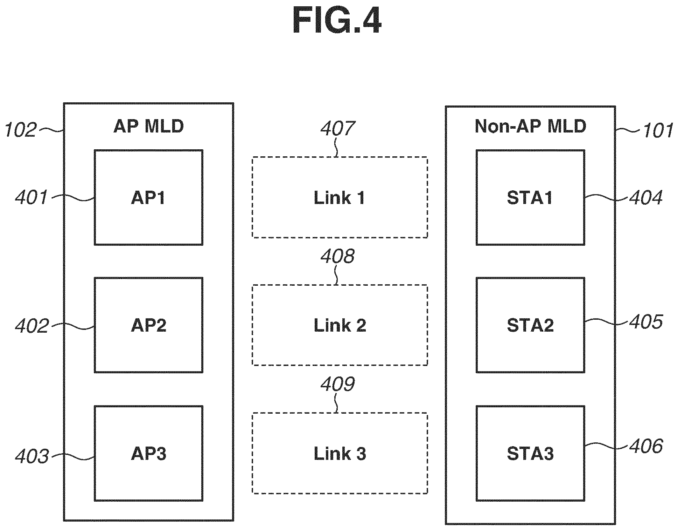

Fig. 4 illustrates a configuration of the AP MLD and the Non-AP MLD performing multi-link communication.

A communication apparatus performing a multi-link operation is referred to as an MLD. An MLD includes a plurality of STAs and/or access points (APs) to be linked with respective links. An MLD having an AP function is referred to as an AP MLD. An MLD not having an AP function is referred to as a Non-AP MLD.

In Fig. 4, an AP1 401 and an STA1 404 establish link 1 407 via a first frequency channel. Similarly, an AP2 402 and an STA2 405 establish link 2 408 via a second frequency channel. An AP3 403 and an STA3 406 establish link 3 409 via a third frequency channel.

As employed herein, the AP MLD and the Non-AP MLD establish connections via frequency channels in sub-GHz, 2.4-GHz, 3.6-GHz, 4.9- and 5-GHz, 60-GHz, and 6-GHz bands. The AP MLD and the Non-AP MLD maintain a connection on a second link via the second frequency channel in parallel with a connection on a first link via the first frequency channel. The AP MLD and the Non-AP MLD may establish a plurality of connections via different frequency channels in the same frequency band instead of connections in different frequency bands.

The links 1, 2, and 3 are each assigned the number of spatial streams based on their per-link spatial stream capability. In a case of six antennas, each link uses two of the antennas. In other words, the per-link spatial stream capability of each link is "2". As will be described below, in a case where the link 1 and the link 2 and/or the link 3 are EMLMR links, the per-link spatial capability of the link 1 during an EMLMR operation is "4" or "6", and that of the link 2 and/or the link 3 is "0". As a result, subdivided pieces of a piece of data or different pieces of data can be transmitted and received at the same timing and at the same frequency via the link 1 in a spatially non-interfering manner using the plurality of antennas. The number of spatial streams is determined by an EHT Capabilities element included in a frame declaring that the no-AP MLD supports EHT, or an EHT Operation element. Specifically, the number of spatial streams is determined based on the value of a Supported EHT-Modulation and Coding Scheme (MCS) And Number of Spatial Streams (NSS) Set field or a Basic EHT-MCS And NSS Set field included in the EHT Capabilities element or the EHT Operation element.

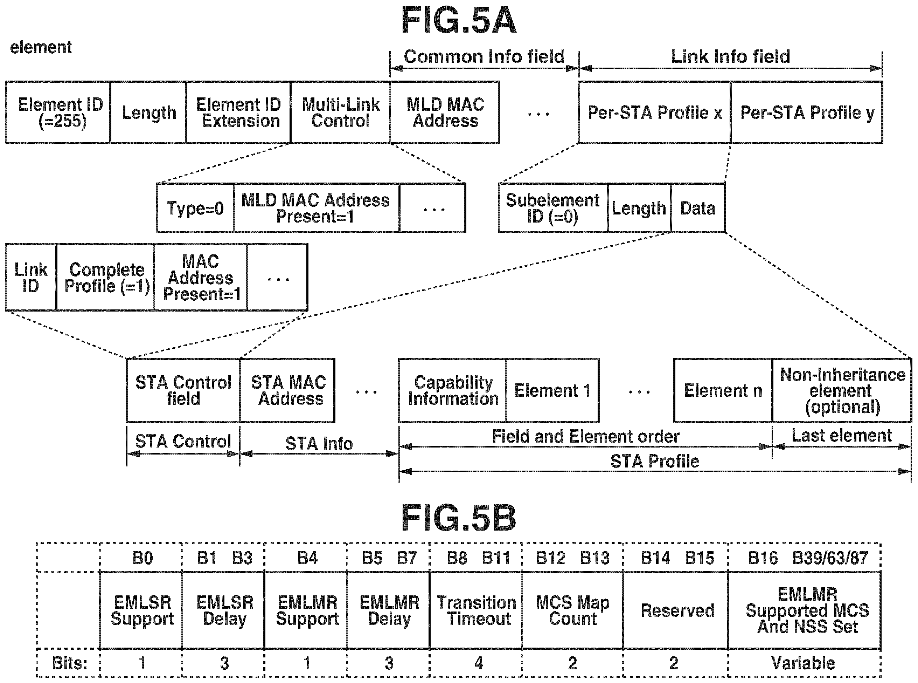

Fig. 5A illustrates a Basic variant Multi-Link element in an Association Request frame. Fig. 5B illustrates EMLMR Capabilities subfields included in a Common Info field of the Basic variant Multi-Link element. In a case where an EMLMR Support field is "0", it indicates that EMLMR is not supported. In a case where the EMLMR Support field is " 1", it indicates that EMLMR is supported. When multi-link communication is established, all links establish EMLMR links. While the Basic variant Multi-Link element is described to be included in the Association Request frame in establishing the multi-link, the Basic variant Multi-Link element may be included in a probe request frame, a probe response frame, an association response frame, or a beacon frame.

EMLMR links are established by transmitting, receiving, or exchanging a frame including an EMLMR Support subfield having a value of 1 via the links constituting the multi-link. Such operation may be performed on only some of the links constituting the multi-link to establish EMLMR links on only those links. Alternatively, a frame including the EMLMR support subfield having a value of 1 may be transmitted, received, or exchanged via a link to establish EMLMR links on a plurality of links including other links. In such a case, EMI,MR links may be established on all the links constituting the multi-link or some of the links. To specify the links to establish EMLMR links, information for identifying the links to establish EMLMR links may be included into the frame including the EMLMR Support subfield having a value of 1 to specify the links to establish the EMLMR links. Examples of information for identifying a link may include a link identifier (ID), a basic service set identifier (BSSID) corresponding to the link, and a traffic identifier (TID).

The EMLMR Supported MCS And NSS Set subfield indicates the maximum number of spatial streams in transmitting and receiving physical layer convergence protocol data units (PPDUs) during an EMLMR operation. An EMLMR operation on a specific link decreases the number of spatial streams assigned to the links other than the one performing the EMLMR operation. The specific link can transmit PPDUs with an increased number of spatial streams.

While EMLMR links are instructed to be established in establishing the multi-link, EMLMR links may be instructed to be established using an Action frame transmitted after the establishment of the multi-link. In such a case, a frame called enhanced multi-link (EML) Operating Mode Notification frame may be prepared to issue an instruction to establish the EMLMR links. For example, when a Non AP MLD receives a frame including an EMLMR Support subfield having a value of 1 and transmits an EML Operating Mode Notification frame including an EMLMR Mode subfield having a value of 1, the links on which the frames have been transmitted and received establish EMLMR links. Alternatively, some other links or all the links constituting the multi-link may establish EMLMR links. In a case where an AP MLD transmits a frame including an EMLMR Support subfield having a value of 1 and receives an EML Operating Mode Notification frame including an EMLMR Mode subfield having a value of 1, the links on which the frames have been transmitted and received establish EMLMR links. Alternatively, some other links or all the links constituting the multi-link may establish EMLMR links. In such a case, the links to establish EMLMR links may be specified by including information for identifying the links to establish EMLMR links into the EML Operating Mode Notification frame. Examples of information for identifying a link include a link ID, a BSSID corresponding to the link, and a TID.

While the Non-AP MLD is described to play a leading role in establishing EMLMR links, the AP MLD may issue an instruction to establish EMLMR links. The EML Operating Mode Notification frame is an Action frame that the non-AP MLD transmits to operate in an EMLMR mode. In a case where EMLMR links are not established after the establishment of multi-link communication or are deleted after the establishment of the EMLMR links, the EML Operating Mode Notification frame needs to be transmitted to operate in the EMLMR mode.

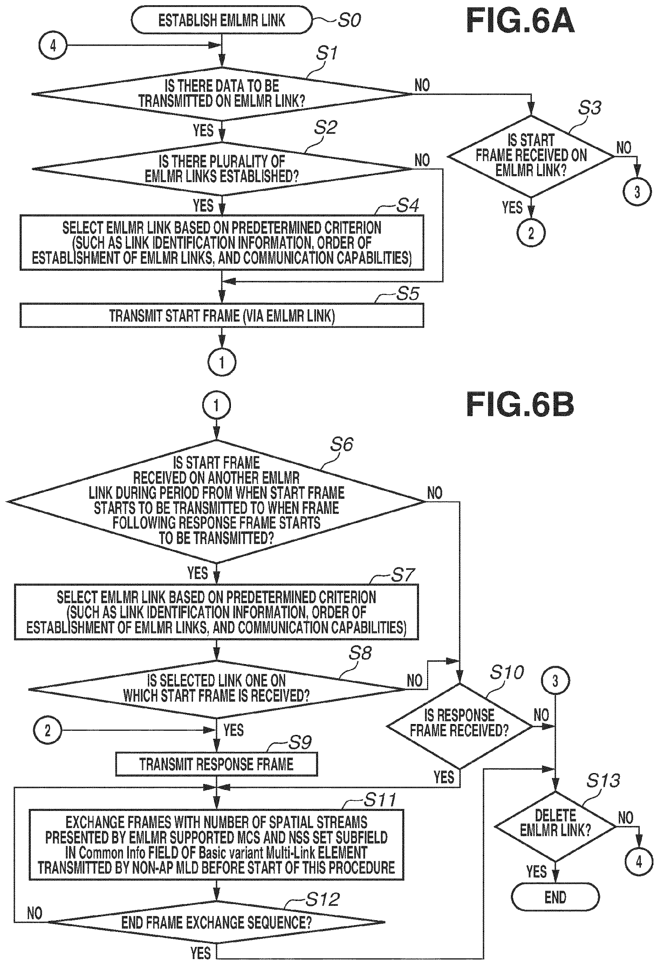

Next, the behavior of the Non-AP MLD 101 and/or the AP MLD 102 in operating in the EMLMR mode to exchange frames after the establishment of an EMLMR link will be described with reference to Figs. 6A and 6B. As employed in the present invention, an EMLMR link to perform an EMLMR operation is expressed to proceed with a frame exchange sequence since the frame exchange sequence has been started at a timing of transmission of a start frame. While the following behavior is of the frame processing unit 302 or the EMLMR control unit 303, in terms of the communication apparatuses, the behavior is that of at least either one of the Non-AP MLD 101 and the AP MLD 102. The following description will thus be given with the control unit 202 of the communication apparatus(es) as the agent.

In step S0, the control unit 202 establishes an EMLMR link. The EMMLMR link is established by any of the foregoing methods. At this point in time, the control unit 202 has not performed an EMLMR operation on any link. In step S1, the control unit 202 determines whether there is data to be transmitted to a communication apparatus to serve as a communication partner. Examples of the data to be transmitted include data requested to be transmitted to the communication apparatus to serve as the communication partner by a communication apparatus, and data generated by the functional unit 203.

In a case where the determination of step S1 is yes (YES in step S1), the processing proceeds to step S2. In a case where the determination of step S1 is no (NO in step S1), the processing proceeds to step S3. In step S3, the control unit 202 determines whether a start frame is received from the partner communication apparatus on the EMLMR link. In a case where the determination of step S3 is yes (YES in step S3), the processing proceeds to step S9. In a case where the determination of step S3 is no (NO in step S3), the processing proceeds to step S13. The start frame on the EMLMR link refers to a first frame transmitted in the Frame exchange sequence defined in the IEEE 802.11 Annex G. Examples include a Request To Send (RTS) frame and an MU-RTS Trigger frame. This start frame serves as an instruction to start frame exchange on the EMLMR link after the establishment of the EMLMR link.

In step S13, the control unit 202 determines whether to delete the EMLMR link. In a case where the EMLMR link is to be deleted (YES in step S13), the processing ends. In a case where the EMLMR link is to not be deleted (NO in step S13), the processing returns to step S1. The processing of Figs. 6A and 6B thus continues while the EMLMR link is established. By contrast, in a case where the EMLMR link is deleted, the processing ends. The EMLMR link can be deleted based on condition that the communication apparatus has not transmitted or received data on the EMLMR link for a certain time, or upon reception of a frame including an EMLMR link deletion request from the partner communication apparatus. Examples of the frame including an EMLMR link deletion request include an EML Operating Mode Notification frame including an EMLMR Mode subfield having a value of 0 and a frame including an EMLMR Support subfield having a value of 0.

EMLMR links are deleted by transmitting, receiving, or exchanging such frames on the EMLMR links. Here, such operation may be performed on only some of the EMLMR links to delete only those EMLMR links. The operation may be performed on all links to delete all the EMLMR links. A frame including an EMLMR link deletion request may be transmitted, received, or exchanged on a link to delete a plurality of EMLMR links including other EMLMR links. In such a case, all EMLMR links may be deleted, or some of the EMLMR links may be deleted. Here, the EMLMR links to be deleted may be specified by including information for identifying the EMLMR links to be deleted into the frame including the EMLMR link deletion request. Examples of information for identifying a link include a link ID, a BSSID corresponding to the link, and a TID.

In step S2, the control unit 202 determines whether there is a plurality of EMLMR links established. For example, in a case where not only the link 1 but the link 2 is established as well, the determination is yes. In a case where only the link 1 is established, the determination is no. Determination of whether there is a plurality of EMI,MR links established can be performed by determining whether each of a plurality of links transmits and receives a frame including an EMLMR Support subfield having a value of 1. In the case of the non AP MLD, determination of whether each of the plurality of links receives a frame including an EMLMR Support subfield having a value of 1 and transmits an EML Operating Mode Notification frame including an EMLMR Mode subfield having a value of 1 may be performed. In the case of the AP MLD, determination of whether each of the plurality of links transmits an EMLMR Support subfield having a value of 1 and receives an EML Operating Mode Notification frame including an EMLMR Mode subfield having a value of 1 may be performed. Alternatively, whether there is a plurality of EMLMR links established may be checked by performing the foregoing determination on one of the links constituting the multi-link, not each of the plurality of links.

In such a case, frames including an EMLMR Support subfield having a value of 1 and information for identifying the links to establish EMLMR links may be exchanged, and in a case where there is a plurality of links on which the link-identifying information in the frames transmitted by both the MLDs matches, it can be determined that a plurality of EMLMR links is established. Here, in the case of the non-AP MLD, an EML Operating Mode Notification frame including the information for identifying the links to establish EMLMR links may be transmitted instead of the frame including the EMLMR Support subfield and the information for identifying the links to establish EMLMR links. In the case of the AP MLD, an EML Operating Mode Notification frame including the information for identifying the links to establish EMLMR links instead of the frame including the EMLMR Support subfield and the information for identifying the links to establish EMLMR links.

In a case where the determination of step S2 is no (NO in step S2), the control unit 202 transmits the start frame to the partner communication apparatus on the specific link that is the EMLMR link. In a case where the determination of step S2 is yes (YES in step S2), the control unit 202 selects one of the plurality of EMLMR links based on a predetermined criterion.

How to perform the determination based on the predetermined criterion will be described. There are roughly three methods of determination: (1) selection based on the information for identifying the links (such as link IDs), (2) selection based on the order of establishment of the EMLMR links, and (3) communication capabilities (such as the degrees of congestion of the channels corresponding to the links [numbers of STAs connected to the AP]), at least one of which is used to perform the selection.

In a case where the selection is performed based on the information for identifying the links (such as link IDs), the control unit 202 refers to a Link ID subfield of the Multi-Link element illustrated in Fig. 5A and performs the determination. Link IDs are IDs assigned to the respective links by establishing the multi-link. In a case where the IDs are assigned in the order of establishment of the link IDs, a link with a low link ID among the plurality of EMLMR links is selected as the EMLMR link. Alternatively, a link with a high link ID may be selected as the EMLMR link.

More specifically, in the case where the selection is performed based on the order of establishment of the EMLMR links, the selection is performed based on at least one of the following types of order:
- The order in which frames including an EMLMR Support subfield having a value of 1 are transmitted,
- The order in which frames including an EMLMR Support subfield having a value of 1 are received,
- The order in which frames including an EMLMR Support subfield having a value of 1 are transmitted and received,
- The order in which EML Operating Mode Notification frames including an EMLMR Mode subfield having a value of 1 are transmitted (in the case of the non-AP MLD),
- The order in which EML Operating Mode Notification frames including an EMLMR Mode subfield having a value of 1 are received (in the case of the AP MLD),
- The order in which frames including an EMLMR Support subfield having a value of 1 are received and EML Operating Mode Notification frames including an EMLMR Mode subfield having a value of 1 are transmitted (in the case of the Non-AP MLD), and
- The order in which frames including an EMLMR Support subfield having a value of 1 are transmitted and EML Operating Mode Notification frames including an EMLMR Mode subfield having a value of 1 are received (in the case of the AP MLD).

In a case where the frames include information for identifying a link to establish an EMLMR link, an EMLMR link identified by the information may be selected based on the order of transmission or reception of the information. The EMLMR link identified by the information for identifying a link to establish an EMLMR link may be selected based on the order of matching of the information transmitted and that received.

Based on such order, EMLMR links are each assigned with a number from 1. That is, an EMLMR link assigned with 1 in link order is the EMLMR link that is selected based on the predetermined criterion. For example, in a case where the selection of the EMLMR link is performed in the order of reception of frames including an EMLMR Support subfield having a value of 1, and when the AP MLD receives a frame including an EMLMR Support subfield having a value of 1 on the link 1 and then on the link 2, the link 1 is selected since the link 1 is assigned with 1 in order. As will be described in another exemplary embodiment, in a case where a plurality of EMLMR links is selected, EMLMR links are selected in ascending order up to a defined value of establishable EMLMR links.

In a case where an EMLMR link is selected based on the communication capabilities, the degrees of congestion of the channels corresponding to the respective EMLMR links are measured, and an EMLMR link of the lowest degree of congestion is selected as the EMLMR link. Examples of the measurement method include determining the degrees of congestion based on the numbers of STAs connected to the AP, and determining the channel occupancy ratios of the respective links of the multi-link.

After an EMLMR link is selected in step S4, then in step S5, the control unit 202 transmits a start frame to start the frame exchange sequence via the selected EMLMR link. In step S6, the control unit 202 determines whether another start frame is received on an EMLMR link other than the selected EMLMR link during the period from when the start frame starts to be transmitted to when a frame is first transmitted on the EMLMR link after reception of a response frame. The response frame on the EMLMR link is a frame that the communication apparatus having received the start frame transmits as a response in the frame exchange sequence defined in the IEEE 802.11 Annex G. Examples include a Clear To Send (CTS) frame.

In a case where the determination of step S6 is no (NO in step S6), i.e., it is not detected that another start frame is received on an EMLMR link other than the selected EMLMR link, the processing proceeds to step S10. In step S10, the control unit 202 determines whether a response frame to the start frame is received. In a case where the response frame is not received (NO in step S10), the processing proceeds to step S13. In a case where the response frame is received (YES in step S10), the processing proceeds to step S11. Step S11 will be described below.

In a case where the determination of step S6 is yes (YES in step S6), i.e., it is detected that another start frame is received on an EMLMR link other than the selected EMLMR link, the processing proceeds to step S7. In step S7, the control unit 202 selects an EMLMR from the EMLMR links on which the start frames are transmitted or received. A predetermined criterion for the selection is similar to that of step S4, and a description thereof will thus be omitted. In step S8, the control unit 202 determines whether the selected link is the one on which the start frame is received. In a case where the determination of step S8 is yes (YES in step S8), the processing proceeds to step S9. In step S9, the control unit 202 transmits a response frame. To perform an EMLMR operation on the selected link, the processing proceeds to step S 11. More specifically, the selected link is a link for the partner communication apparatus to perform an EMLMR operation on, and an EMLMR operation desired by the partner communication apparatus is enabled.

In a case where the determination of step S8 is no (NO in step S8), the processing proceeds to step S10. In step S10, the control unit 202 determines whether a response frame to the start frame is received. In other words, the selected link is a link for the communication apparatus performing the processing of Figs. 6A and 6B to perform an EMLMR operation on, and an EMLMR operation is controlled to be not performed even in a case where a start frame is received on another EMLMR link.

In step S11, the control unit 202 starts to exchange frames with the number of spatial streams up to the number of spatial streams presented by the EMLMR SUPPORTED MCS AND NSS SET subfield in the Common Info field of the Basic variant Multi-Link element transmitted by the Non-AP MLD before the start of this procedure. As a result, the selected EMLMR link performs an EMLMR operation. In step S12, the control unit 202 determines whether the frame exchange sequence ends. The control unit 202 continues the frame exchange sequence until the end. In a case where the frame exchange sequence ends (YES in step S12), the processing proceeds to step S13.

In the first exemplary embodiment, a method for appropriately controlling an EMLMR operation in a case where a plurality of start frames is exchanged with the partner communication apparatus before the start of the EMLMR operation has been described. A specific method for the appropriate control includes selecting an EMLMR link based on a predetermined criterion and performing an EMLMR operation on the selected EMLMR link, i.e., continuing the frame exchange sequence on the selected EMLMR link while suspending the frame exchange sequence on the unselected EMLMR link.

### [Other Exemplary Embodiments]

In the first exemplary embodiment, a method for selecting an EMLMR link is disclosed. However, a plurality of EMLMR links may be operated in the EMLMR mode. As for an example case, four links including link 1 to link 4 are formed between a communication apparatus and a partner communication apparatus. In a case where the links 1 and 2 are operated as EMLMR links, spatial streams of the link 3 may be allocated to the link 1, and spatial streams of the link 4 may be allocated to the link 2. As a result, the numbers of spatial streams of the links 1 and 2 increase, and the numbers of spatial streams of the links 3 and 4 decrease. In view of possibility of such a case, a plurality of EMLMR links can be selected based on a predetermined criterion in steps S4 and S7 of Figs. 6A and 6B if there can be a plurality of EMLMR links to increase the number of spatial streams of.

In the first exemplary embodiment, in selecting an EMLMR link based on the order of establishment of EMLMR links, the EMLMR link is selected in ascending order. However, the EMLMR link may be selected in descending order. An EMLMR link that comes to the middle in order may be selected first.

In the first exemplary embodiment, an example accommodating both the method for continuing the frame exchange sequence on the EMLMR link where a start frame is received and the method for continuing the frame exchange sequence on the EMLMR link where a start frame is transmitted has been described. However, there can be a method for continuing the frame exchange sequence only on the EMLMR link where a start frame is received and a method for continuing the frame exchange sequence only on the EMLMR link where a start frame is transmitted. In the former case, the processing of steps S7 and S8 is skipped. In a case where the determination of step S6 is yes, the frame exchange sequence is continued on the EMLMR link where a start frame is received. In the latter case, the processing of steps S7 and S8 is skipped, and even in a case where the determination of step S6 is yes, the processing in step S10 for determination of whether a response frame is received is performed, and the frame exchange sequence is continued on the EMLMR link where a start frame is transmitted.

In the first exemplary embodiment, a method for selecting an EMLMR link based on a predetermined criterion and performing an EMLMR operation on the selected EMLMR link has been disclosed. However, in a case where a plurality of start frames is exchanged with the partner communication apparatus before the start of the EMLMR operation, the frame exchange sequence on all the EMLMR links may be aborted. In such a case, the processing needs to be started over from the step of transmitting or receiving a start frame. Specifically, in a case where the determination of step S6 is yes, the processing proceeds to step S13. Thus, the EMLMR operation can be cancelled, and an intended appropriate procedure is performed to cause an EMLMR link to perform an EMLMR operation.

In the first exemplary embodiment, the method for selecting an EMLMR link based on a predetermined criterion and performing an EMLMR operation on the selected EMLMR link has been described. However, in a case where a plurality of start frames is exchanged with the partner communication apparatus before the start of the EMLMR operation, frames can be exchanged with the number of spatial streams based on the per-link spatial stream capability of each link. In such a case, the processing of steps S7 and S8 is skipped, and in a case where the determination of step S6 is yes, the communication apparatus receives or transmits a response frame and then performs the processing of step S11. As a result, data is transmitted and received with the number of spatial streams allocated for each link without increasing or decreasing the number of spatial streams intended for the EMLMR operation, since the number of spatial streams is determined based on the value of a Supported EHT-MCS And NSS Set field (or Basic EHT-MCS And NSS Set field). This field is included in the conventional EHT Capabilities element (or EHT Operation element).

While the Basic variant Multi-Link element is described in the first exemplary embodiment, a Basic Multi-Link element may be used. The EMLMR Supported MCS And NSS Set subfield may be replaced with an EMLMR Rx NSS subfield and an EMLMR Tx NSS subfield. In such a case, the EMLMR Rx NSS subfield indicates the maximum number of spatial streams during reception, and the EMLMR Tx NSS subfield indicates the maximum number of spatial streams during transmission.

A recording medium in which program codes of software for realizing the above-described functions are recorded may be supplied to a system or an apparatus, and a computer (CPU or MPU) of the system or the apparatus may read and execute the program codes stored in the recording medium. In this case, the program code itself read from the storage medium realizes the functions of the above-described exemplary embodiments, and the storage medium storing the program code constitutes the above-described apparatus.

Examples of the storage medium for supplying the program code include a flexible disk, a hard disk, an optical disk, a magneto-optical disk, a CD-ROM, a CD-R, a magnetic tape, a nonvolatile memory card, a ROM, a DVD, and the like.

Furthermore, the functions described above may be implemented not only by executing the program code read by the computer but also by causing an OS running on the computer to perform part or all of the actual processing based on the instructions of the program code. The OS is an abbreviation for Operating System.

Furthermore, the program code read out from the storage medium is written in a memory disposed in a function expansion board inserted into the computer or a function expansion unit connected to the computer. Based on the instructions of the program code, a CPU disposed in the function expansion board or the function expansion unit may perform a part or all of the actual processing to realize the above-described functions.

The present invention can also be realized by processing in which a program for realizing one or more functions of the above-described exemplary embodiments is supplied to a system or an apparatus via a network or a storage medium, and one or more processors in a computer of the system or the apparatus read and execute the program. The present invention can also be realized by a circuit (for example, an ASIC) that realizes one or more functions.

The present invention is not limited to the above embodiments, and various modifications and variations can be made without departing from the spirit and scope of the present invention.

This application claims the benefit of Japanese Patent Application No. 2021-162359, filed September 30, 2021, which is hereby incorporated by reference herein in its entirety.

## Claims

1. A communication apparatus that operates as a multi-link device complaint with an Institute of Electrical and Electronics Engineers (IEEE) 802.11 series standard, the communication apparatus comprising:
a selection unit configured to select at least one enhanced multi-link multi-radio (EMLMR) link from among a plurality of EMLMR links, based on information about a link of multi-link communication; and
a control unit configured to control start of a frame exchange sequence on the selected at least one EMLMR link.

2. The communication apparatus according to Claim 1, wherein the selection unit is configured to select the EMLMR link(s) based on link identifiers (IDs) assigned to respective links in the multi-link communication.

3. The communication apparatus according to Claim 1, wherein the control unit is configured to select the EMLMR link(s) based on order of establishment of EMLMR links by respective links in the multi-link communication.

4. The communication apparatus according to Claim 1, wherein the control unit is configured to select the EMLMR link(s), based on communication capabilities of respective links in the multi-link communication.

5. The communication apparatus according to any one of Claims 1 to 4, further comprising a determination unit configured to determine whether there is a plurality of EMLMR links,
wherein the selection unit is configured to perform the selection, based on a determination performed by the determination unit that there is a plurality of EMLMR links.

6. The communication apparatus according to Claim 5, wherein, in a case where a frame including an EMLMR Support subfield having a value of 1 is transmitted and received, or a frame including the EMLMR Support subfield having a value of 1 is received and an enhanced multi-link (EML) Operating Mode Notification frame including an EMLMR Mode subfield having a value of 1 is transmitted, or a frame including the EMLMR Support subfield having a value of 1 is transmitted and an EML Operating Mode Notification frame including the EMLMR Mode subfield having a value of 1 is received on a plurality of links, the determination unit determines that there is a plurality of links.

7. The communication apparatus according to any one of Claims 1 to 6, wherein the control unit is configured to control, in a case where the control unit controls start of a frame exchange sequence on the selected at least one EMLMR link, frame exchange after an initial frame is exchanged in a started frame exchange sequence with a number of spatial streams up to a value defined in an EMLMR SUPPORTED Modulation and Coding Scheme (MCS) AND Number of Spatial Streams (NSS) SET subfield by the communication apparatus operating as a non-access point (non-AP) multi-link device (MLD) or by the another communication apparatus.

8. A control method for controlling a communication apparatus operating as an MLD compliant with an IEEE 802.11 series standard, the control method comprising:
a selecting step for selecting at least one EMLMR link from among a plurality of EMLMR links based on information about a multi-link; and
a controlling step for controlling start of a frame exchange sequence on the selected at least one EMLMR link.

9. A program for causing a computer to function as the units of the communication apparatus according to any one of Claims 1 to 7.
